# EUROPÄISCHE PATENTSCHRIFT

(11) **EP 1 440 782 B1**
(45) Veröffentlichungstag und Bekanntmachung des Hinweises auf die Patenterteilung: **12.03.2008**
(21) Anmeldenummer: 03012299.8
(22) Anmeldetag: 12.06.2003
(51) Int. Cl.: B29C 45/00, H01H 11/00

(54) **Vorrichtung und Verfahren zur Herstellung von aus Kunststoff bestehenden Gegenständen (Kunststoffbauteilen) mittels Fliessbremsen in Spritzgusswerkzeugen und deren Verwendung**
Apparatus and method for producing plastic parts using injection moulds having flow decelerating means and use thereof
Appareil et procédé pour produire des objects plastiques en utilisant des moules à injecter avec des dispositifs de décélération de flux et leur utilisation

(30) Priorität: 21.08.2002 DE 10238238
(43) Veröffentlichungstag der Anmeldung: 28.07.2004
(73) Patentinhaber: ROBERT BOSCH GMBH, 70442 Stuttgart (DE)
(72) Erfinder: Kloeter, Georg, 31141 Hildesheim (DE)

(56) Entgegenhaltungen:
- DE-A- 3 413 113
- PATENT ABSTRACTS OF JAPAN vol. 008, no. 274 (M-345), 14. Dezember 1984 (1984-12-14) -& JP 59 145127 A (PIONEER KK), 20. August 1984 (1984-08-20)
- PATENT ABSTRACTS OF JAPAN vol. 1997, no. 08, 29. August 1997 (1997-08-29) -& JP 09 104044 A (DAINIPPON PRINTING CO LTD), 22. April 1997 (1997-04-22)
- PATENT ABSTRACTS OF JAPAN vol. 1997, no. 04, 30. April 1997 (1997-04-30) -& JP 08 318550 A (MITSUBISHI PLASTICS IND LTD), 3. Dezember 1996 (1996-12-03)
- WOLF H-J: "PC-PROGRAMME FUR DIE FULLSIMULATION BEIM SPRITZGIESSEN PRUFUNG DER PRAKTISCHEN EINSATZFAHIGKEIT AM BEISPIEL VON MOLDFLOW" , KUNSTSTOFFE, CARL HANSER VERLAG. MUNCHEN, DE, VOL. 84, NR. 4, PAGE(S) 399-402 XP000441666 ISSN: 0023-5563 * Seite 84, Spalte 2, Absatz 3 *
- PATENT ABSTRACTS OF JAPAN vol. 2000, no. 13, 5. Februar 2001 (2001-02-05) -& JP 2000 280302 A (INOAC CORP), 10. Oktober 2000 (2000-10-10)

## Beschreibung

### Technisches Gebiet

Die Erfindung betrifft eine Vorrichtung und ein Verfahren nach dem Oberbegriff der Ansprüche 1 und 17.

### Stand der Technik

Aus dem Gebiet Kunststoffverarbeitung ist allgemein bekannt, Kunststoffbauteile unter anderem mit dem Verfahren des Spritzgießens herzustellen. Dabei wird der plastifizierte, geschmolzene Kunststoff unter hohem Druck in eine Kavität (Form) eines Werkzeuges gespritzt und anschließend abgekühlt/erwärmt, bis das Bauteil dimensionsstabil entnommen werden kann.

Aus der DE 195 32 243 C2 sind ein Verfahren und eine Vorrichtung zum Herstellen von Kunststoffgegenständen mit massiven Stellen und Hohlstellen bekannt. Das Verfahren beginnt damit, dass ein Teil einer Kavität eines Formwerkzeuges mittels eines Schieberelementes, das in die Kavität hineingeschoben wird, abgesperrt wird, so dass in den abgesperrten Bereich, der den massiv ausgebildeten Bereich des Formteiles bilden soll, keine Kunststoffschmelze gelangen kann. Danach erfolgt das Einspritzen von Schmelze in den nicht abgesperrten Bereich der Kavität des Formwerkzeuges entlang eines Schmelzefließweges, der sich von einer Kunststoffplastifiziereinheit durch eine Kunststoffeinspritzdüse bis in das Formwerkzeug erstreckt. Nach Öffnen der Absperrung mittels des Schieberelementes, das aus der Kavität herausgezogen wird, so dass Kunststoffschmelze in den bisher abgesperrten Bereich der Kavität gelangen kann, erfolgt gleichzeitig mit und/oder anschließend an das Einspritzen von Kunststoffschmelze das Eingeben eines Druckfluids in den bisher nicht abgesperrten Teil der Kavität, insbesondere Druckgases, in die Schmelze mittels mindestens einer Fluideinspritzdüse. Dadurch wird die in das Formwerkzeug eingebrachte Schmelze unter Hohlraumbildung in gewünschten Bereichen der Kavität verteilt und an die Kavitätswandungen des Formwerkzeuges angepresst. Anschließend lässt man das so hergestellte Formteil bis auf eine Temperatur abkühlen, die unterhalb des Schmelzpunktes der Kunststoffschmelze liegt, und entlastet die Kavität vom Druck des Druckfluids. Abschließend wird das Formteil aus dem Formwerkzeug entformt.

In Ergänzung zur Druckschrift DE 195 32 243 C2 ist aus dem Stand der Technik die DE 43 23 536 A1 bekannt, die eine Vorrichtung zur Betätigung von Schiebern in einem Spritzgusswerkzeug für elastomere Mischungen, mit einem Hohlraum, der von Schiebern begrenzt ist, wobei die Schieber getrennt voneinander durch einen Betätigungszylinder ansteuerbar sind, offenbart. Dabei beschreibt die Druckschrift, dass alle Schieber zur Begrenzung eines oder mehrerer Hohlräume einem einzigen Betätigungsglied zugeordnet sind. Dabei sind die Schieber sowohl in der horizontalen als auch in der vertikalen Ebene anordbar beziehungsweise radial oder auch translatorisch verschiebbar.

Die Druckschrift DE 41 15 208 C2 offenbart ein weiteres Verfahren und eine Vorrichtung zur Herstellung von Kunststoff-Formstücken, bei denen die Wandstärke an bestimmten Teilbereichen wesentlich herabgesetzt werden kann, so dass Ausnehmungen zur Aufnahme dünner Gegenstände, zum Beispiel elektronischer Bauteile, in einer Wand eines Kunststoff-Formstücks mit an sich schon geringer Wandstärke gebildet werden können. Das Verfahren wird unter Einspritzen eines schmelzflüssigen Kunststoffmaterials in einen Formraum und anschließendem Abkühlen des Kunststoffmaterials durchgeführt. Das Kunststoffmaterial wird in einen Ausgangsformraum mit einer Konfiguration im Wesentlichen der des zu fertigenden Formstückes ohne Wandstärkenreduktion eingespritzt und der Abstand bestimmter Wandbereiche des Ausgangsformraumes, die den Bereichen der Wandstärkenreduktion entsprechen, bis einem der Wandstärkenreduktion entsprechenden Ausmaß unter Verdrängung des Kunststoffmateriales in benachbarte Bereiche des Formraumes verkleinert. Dabei wird das Volumen des Formraumes nach Beginn des Formfüllvorganges im Wesentlichen entsprechend dem Volumen des verdrängten Materials vergrößert.

Aus den bisher bekannten Verfahren und Vorrichtungen ergeben sich folgende Nachteile.

Aufgrund der konstruktiv vorgegebenen Form eines Kunststoffbauteils und dem/der gewählten Anspritzpunkt/e (Punkte, an denen die Schmelze in die Kavität eintritt) ergibt sich ein bestimmter Verlauf der Füllung der Kavität durch die Kunststoffschmelze. Dieser vorgegebene Schmelzefluss kann verschiedene Probleme am zu fertigenden Kunststoffbauteil erzeugen. Ein erstes Problem liegt darin, dass sich beim Zusammenfluss zweier Kunststoff-Schmelzefronten unerwünscht liegende Bindenähte im Bereich des Zusammenflusses bilden. Des Weiteren entstehen Lufteinschlüsse und dadurch eventuell verursachte "Brenner", die durch Luftkompression erzeugte Wärme verursacht werden und dadurch chemische Materialveränderungen hervorrufen. Zudem können in nachteiliger Weise Formfüllungen, Schlieren im Material und fehlerhafte Oberflächenmarkierungen die Folge sein.

Die zur Abhilfe oder Abminderung der Fehler vom Anwender durchgeführten verschiedenen Maßnahmen werden zumeist durch eine intuitive Vorgehensweise vorgenommen und es fehlt eine Möglichkeit, den Kunststoff-Schmelzefluss mehr oder weniger genau vorhersagen zu können.

Aus DE-A 3413113 ist eine Spritzgießvorrichtung bekannt, bei welcher der Strömungswiderstand einer sich in der Kavität ausbreitenden Kunststoffschmelze durch Einspritzen von thermoplastischem Material beeinflusst wird.

Die JP-A-59145127 zeigt eine Spritzgießvorrichtung zur Fertigung einer Paste, wobei die Kavität derart geformt ist, dass ein verbesserter Materialfluss stattfindet.

Die JP-A-09104044 zeigt eine Spritzgießvorrichtung, mit einer Kavität, die durch einen in das Werkzeugoberteil und durch eine Durchführung des Werkzeugunterteils eingeführten Kern zwischen dem Werkzeugoberteil, dem Werkzeugunterteil und dem Kern ausgebildet wird.

Beim Gegenstand der JP-A-2000280302 wird ein die Fließgeschwindigkeit der Schmelze reduzierende Element zu einem bestimmten Zeitpunkt aus der Kavität zurückgezogen, um Lufttaschen zu vermeiden.

JP-A-2000280302 offenbart eine Vorrichtung und ein Verfahren gemäß dem Oberbegriff der Ansprüche 1 und 17.

### Darstellung der Erfindung, Aufgabe, Lösung, Vorteile

Es ist Aufgabe der vorliegenden Erfindung, ein Verfahren und eine Vorrichtung der gattungsgemäßen Art anzugeben, das den in die Kavität eines Werkzeuges einzuspritzenden plastifizierten, geschmolzenen Kunststoff (Schmelzefluss) derart gezielt beeinflusst, dass vorkommende Fertigungsprobleme vermieden werden, oder wenigstens in Bereiche des zu fertigenden Gegenstandes - dem Kunststoffbauteil - verschoben werden, in denen sie vom Verwender tolerierbar sind. Weiterhin liegt der Erfindung die Aufgabe zugrunde, eine Möglichkeit zu schaffen, mittels der die Ausbreitung des plastifizierten, geschmolzenen Kunststoffs - also der Kunststoff-Schmelzefluss in der Kavität einer Spritzgießvorrichtung - vorhersagbar ist.

Diese Aufgabe wird durch eine Vorrichtung mit den im Anspruch 1 gekennzeichneten Merkmalen und einem Verfahren mit den im Anspruch 17 gekennzeichneten Merkmalen gelöst.

Dadurch, dass eine Spritzgießvorrichtung, insbesondere zur Herstellung von Gegenständen, insbesondere aus Kunststoff bestehenden Gegenständen (Kunststoffbauteilen), mindestens ein Werkzeugoberteil und mindestens ein Werkzeugunterteil aufweist und zwischen Werkzeugoberteil und Werkzeugunterteil eine Kavität ausbildet und mindestens ein Element, mittels dem ein Strömungswiderstand einer sich in der Kavität ausbreitenden Kunststoffschmelze beeinflussbar ist, ist in vorteilhafter Weise bereits im Vorfeld eine bauliche Veränderung durch Anordnung des mindestens einen Elementes der Spritzgießvorrichtung erfolgt, die zur Folge hat, dass der Schmelzefluss in der Kavität gezielt beeinflussbar ist und vorkommende Fertigungsprobleme vermieden werden können.

Durch das erfindungsgemäße Verfahren des Anspruchs 17, zur Herstellung von Gegenständen, den Kunststoffbauteilen, bei dem durch Zuführung einer plastifizierten Schmelze, in die Kavität, die zwischen einem Werkzeugoberteil und Werkzeugunterteil ausgebildet und nach der Ausbreitung einer sich in der Kavität bildenden Kunststoffschmelzefront, die Form des Gegenstandes dimensionsstabil ausbildet und nach Verfestigung der Kunststoffschmelze der Gegenstand entnommen wird und vor Zuführung der plastifizierten Schmelze mindestens ein Element in die Kavität eingebracht wird, so dass mindestens ein Strömungswiderstand beeinflusst wird, ist eine Herstellung von Kunststoffbauteilen unter Vermeidung und/oder Reduzierung der beschriebenen Nachteile möglich.

Das erfindungsgemäße Verfahren mit den im Anspruch 17 genannten Merkmalen bietet den Vorteil, dass in Abhängigkeit der konstruktiv vorgegebenen Form eines Kunststoffbauteils der Kunststoffschmelzefluss gezielt beeinflussbar und sogar im Vorfeld bestimmbar ist.

Mit Hilfe des Verfahrens und der Vorrichtung sind Kunststoffbauteile herstellbar, deren Form und erste Wandstärke durch eine Kavität in einer Spritzgießvorrichtung vorgegeben sind, wobei das Kunststoffbauteil mindestens eine verlagerte Bindenaht und mindestens eine zweite Wandstärke ausbildet.

In bevorzugter Ausgestaltung der Erfindung ist durch das Element der Spritzgießvorrichtung ein Strömungsquerschnitt in der Kavität veränderbar. Der Strömungsquerschnitt ist dabei verringerbar und der Strömungswiderstand vergrößert sich, wenn das Element in die Kavität hineinragt. Denkbar ist jedoch auch ein Element, welches am Werkzeugoberteil oder am Werkzeugunterteil oder an einem in das Werkzeugoberteil und das Werkzeugunterteil eingeführten Kern ein Element aufweist, welches den Strömungsquerschnitt in der Kavität vergrößert, so dass der Strömungswiderstand an dieser Stelle verringerbar ist.

Erfindungsgemäß ist die Kavität auch durch einen in das Werkzeugoberteil und das Werkzeugunterteil eingeführten Kern zwischen dem Werkzeugoberteil und dem Werkzeugunterteil und dem Kern ausbildbar.

Bevorzugt ist dabei, dass der Kern während der Ausbreitung der Kunststoffschmelze als beweglicher Kern ausgeführt ist.

Auf dem beweglichen Kern ist das Element als mindestens eine erste und/oder zweite Fließbremse angeordnet. Zudem kann am Werkzeugoberteil oder an einem im Werkzeugoberteil ausgebildeten Einsatz das Element mindestens eine dritte Fließbremse angeordnet sein. Die mindestens eine erste und/oder zweite Fließbremse ist dabei eine leistenartige Erhöhung auf dem beweglichen Kern. Die mindestens eine dritte Fließbremse stellt einen schikaneartigen Einbau in einer Ausnehmung am Werkzeugoberteil oder dem im Werkzeugoberteil ausgebildeten Einsatz dar.

Es ist dabei vorgesehen, daß die Fließbremsen beweglich sind.

Der erfindungsgemäßen Spritzgießvorrichtung ist mindestens ein Zuführungselement zur Zuführung der Kunststoffschmelze in die Kavität zugeordnet. Das mindestens eine Zuführungselement weist dabei einen Düsenstock und eine Düse auf, wobei die Düse mindestens einen Anspritzpunkt in der Kavität ausbildet.

Ferner weist der bewegliche Kern eine Betätigungsvorrichtung auf, die zudem an ein rechnergestütztes System ankoppelbar ist. Die Betätigungsvorrichtung ist dabei wahlweise eine mechanische, hydraulische oder elektrische Betätigungseinrichtung.

In weiterer bevorzugter Ausgestaltung der Erfindung wird durch das erfindungsgemäße Verfahren der Strömungswiderstand der Kunststoffschmelze, die in die Kavität eingebracht wird, durch mindestens ein Element beeinflusst. In diesem Verfahrensschritt, der Einbringung des mindestens einen Elementes, wird der Strömungsquerschnitt in der Kavität verändert. Es besteht dabei die Möglichkeit, dass der Strömungsquerschnitt vergrößert oder verkleinert wird.

Durch die Veränderung des Strömungsquerschnittes und Beeinflussung des Strömungswiderstandes wird innerhalb des erfindungsgemäßen Verfahrens mindestens eine erste und eine zweite Kunststoffschmelzefront ausgebildet. Die erste Kunststoffschmelzefront wird mindestens eine erste Geschwindigkeit und die zweite Kunststoffschmelzefront mindestens eine zweite Geschwindigkeit ausbilden.

In weiterer bevorzugter Ausgestaltung der Erfindung ist die erste und zweite Geschwindigkeit der Kunststoffschmelzefronten durch ein rechnergestütztes System vorbestimmbar. Diesem rechnergestützten System ist eine Simulationssoftware zugeordnet. Im Vorfeld können dadurch Füllsimulationen der Kavität nach der Finite-Elemente-Methode (FEM) durchgeführt werden. In besonders vorteilhafter Weise gilt, dass die mindestens erste und zweite Geschwindigkeit bei Einsatz eines starren angeordneten Elementes die Zuführung der Kunststoffschmelze mittels des rechnergestützten Systems vorsimuliert und vorberechnet wird.

Zudem gilt, dass die mindestens erste und zweite Geschwindigkeit bei Einsatz eines beweglich angeordneten Elementes die Zuführung der Kunststoffschmelze mittels des rechnergestützten Systems vorsimuliert und vorberechnet wird.

Ferner wird innerhalb des Verfahrens mindestens ein Anspritzpunkt der Kunststoffschmelze in die Kavität durch das rechnergestützte System vorsimuliert und vorberechnet.

Durch das rechnergestützte System wird eine verlagerte Bindenaht vorbestimmt, die zwischen der ersten und zweiten Kunststoffschmelzefront in Abhängigkeit einer Differenz der ersten und der zweiten Geschwindigkeit ausgebildet wird.

In bevorzugter Ausgestaltung der Erfindung bildet das Element im Kunststoffbauteil mindestens eine zweite Wandstärke aus, die je nach Ausbildung des Elementes zu einer reduzierten beziehungsweise zu einer vergrößerten zweiten Wandstärke führt.

Durch das erfindungsgemäße Verfahren und die zugehörigen Spritzgussvorrichtung wird ein Kunststoffbauteil hergestellt, dessen Form und erste Wandstärke durch eine Kavität der Spritzgießvorrichtung vorgegeben ist und durch mindestens eine verlagerbare Bindenaht und mindestens eine zweite Wandstärke gekennzeichnet ist.

Bevorzugt ist dabei, dass eine Innenkontur des Kunststoffbauteiles durch die Form eines starren oder beweglichen Kerns und des Elementes auf dem starren oder beweglichen Kern, welches in der Kavität angeordnet ist, ausgebildet wird.

Zudem erzeugt das mindestens eine Element mindestens ein erstes Negativabbild auf der Außenkontur und/oder ein zweites Negativabbild auf der Innenkontur des herzustellenden Kunststoffbauteils, wobei sich an den Negativabbildern jeweils die zweite Wandstärke ausbildet.

Weitere bevorzugte Ausgestaltungen der Erfindung ergeben sich aus den übrigen, in den Unteransprüchen genannten Merkmalen.

### Kurze Beschreibung der Zeichnungen

Nachstehend wird die Erfindung in Ausführungsbeispielen anhand der zugehörigen Zeichnungen näher erläutert. Es zeigen:
- Fig. 1: eine Spritzgießvorrichtung in einer Übersichtsdarstellung;
- Fig. 2: eine perspektivische Detailansicht einer Kavität in der Spritzgießvorrichtung mit einem zugehörigen Zuführungselement;
- Fig. 3: einen Schnitt der Kavität in der Spritzgießvorrichtung mit dem zugehörigen Zuführungselement;
- Fig. 4: eine Detailansicht eines Kerns in der Kavität der Spritzgießvorrichtung mit zugehörigem Zuführungselement;
- Fig. 5: einen Schnitt durch die Spritzgießvorrichtung und den Kern in der Kavität und das zugehörige Zuführungselement;
- Fig. 6: ein Kunststoffbauteil (geschnitten) mit Darstellung einer Außenkontur und einer Innenkontur;
- Fig. 7: den Kern mit Fließbremsen;
- Fig. 8: eine Außenansicht des Kunststoffbauteiles bei einer Herstellung ohne Fließbremsen und
- Fig. 9: eine Außenansicht des Kunststoffbauteiles nach Herstellung mittels Fließbremsen.

### Bester Weg zur Ausführung der Erfindung

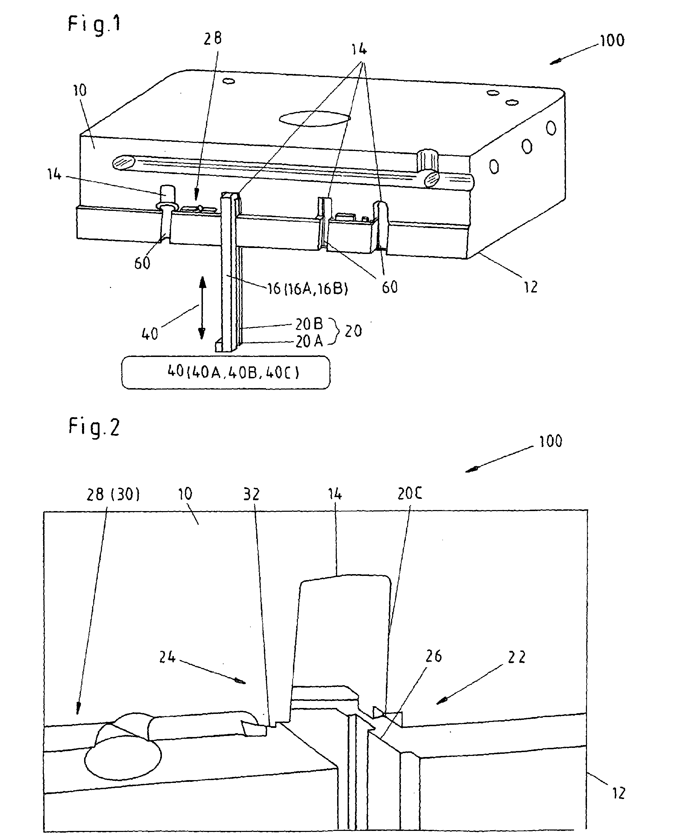

Figur 1 zeigt eine Spritzgießvorrichtung 100 in einer Übersichtsdarstellung. Die Spritzgießvorrichtung 100 besteht aus einem Werkstoffoberteil 10 und einem Werkzeugunterteil 12. Das Werkzeugunterteil 12 weist Durchführungen 60 auf, durch die ein Kern 16 einführbar ist.

Figur 1 zeigt beispielhaft den Kern 16, nachdem der Kern 16 durch eine der Durchführungen 60 des Werkzeugunterteils 12 in das Werkzeugoberteil 10 eingeführt wurde. Zwischen Werkzeugoberteil 10 und dem Werkzeugunterteil 12 sowie dem Kern 16 bildet sich eine Kavität 14.

Figur 1 zeigt weitere Kavitäten 14 zu einem Zeitpunkt, an dem ein Kern 16 noch nicht durch das Werkzeugunterteil 12 in das Werkzeugoberteil 10 eingeführt worden ist. Ferner zeigt Figur 1, dass auf dem Kern 16 Elemente 20 angeordnet sind. Im vorliegenden Ausführungsbeispiel sind auf dem Kern 16 eine erste Fließbremse 20A und eine zweite Fließbremse 20B angeordnet. Die erste Fließbremse 20A und die zweite Fließbremse 20B stellen leistenartige Erhöhungen auf dem Kern 16 dar. Die erste Fließbremse 20A und die zweite Fließbremse 20B sind nahezu über die gesamte Länge des Kerns 16 ausgeführt. Im Bereich des Werkzeugunterteils 12 befinden sich zur Aufnahme der ersten Fließbremse 20A und der zweiten Fließbremse 20B Nuten, die in Figur 1 nicht sichtbar sind. Der Kern 16 ist als ein starrer Kern 16A oder als ein beweglicher Kern 16B ausführbar.

Wird der Kern 16 zu Beginn eines Spritzgießvorgangs in die Spritzgießvorrichtung 100 eingeführt und verbleibt der Kern 16 bis zur Fertigstellung eines Kunststoffbauteils 18 - welches in der Kavität 14 gebildet wird -in der Spritzgießvorrichtung 100 und wird erst dann vor Öffnung der Spritzgießvorrichtung 100 wieder entnommen, handelt es sich um einen starren Kern 16A.

Wird der Kern 16 vor einem Spritzgießvorgang in die Spritzgießvorrichtung 100 eingeführt und auch während des Spritzgießvorgangs bewegt und nach Beendigung des Spritzgießvorgangs aus der Spritzgießvorrichtung 100 entnommen, so handelt es sich um einen beweglichen Kern 16B. Der Kern starre 16A beziehungsweise der bewegliche Kern 16B wird dabei in einer Betätigungsrichtung 62 beweglich angeordnet und wird durch die erste Fließbremse 20A und die zweite Fließbremse 20B in den Nuten 58- in Figur 1 nicht sichtbar - geführt.

Zwischen mehreren ausführbaren Kavitäten 14 in der Spritzgießvorrichtung 100 befindet sich ein Zuführungselement (Angusskanal 28) für eine Kunststoffschmelze, aus der das Kunststoffbauteil 18 in der Kavität 14 herstellbar ist.

Der starre Kern 16A oder der bewegliche Kern 16B sind durch eine Betätigungsvorrichtung 40 in Betätigungsrichtung 62 bewegbar. Die Betätigungsvorrichtung 40 ist durch eine mechanische Betätigungseinrichtung 40A oder durch eine hydraulische Betätigungseinrichtung 40B oder durch eine elektrische Betätigungseinrichtung 40C bewegbar. Die Betätigungsvorrichtung 40 wurde in Figur 1 nicht näher dargestellt.

Figur 2 zeigt eine perspektivische Detailansicht der Kavität 14 in der Spritzgießvorrichtung 100. Die Kavität 14 wird gebildet durch den Raum im Werkzeugoberteil 10 und dem Werkzeugunterteil 12. Der Bereich der Kavität 14 im Werkzeugunterteil 12 dient der Durchführung des Kerns 16 durch das Werkzeugunterteil 12 in den Bereich der Kavität 14 des Werkzeugoberteils 10. Die Kavität 14 weist im Bereich des Werkzeugoberteils 10 eine dritte Fließbremse 20C in einer Ausnehmung 26 auf. Die Seite der Kavität 14, auf der sich später nach Einführung des starren Kerns 16A oder des beweglichen Kerns 16B die erste Fließbremse 20A und die zweite Fließbremse 20B befinden, wird als Fließbremsenseite 22 bezeichnet. Die Seitenfläche der Kavität 14, die der Fließbremsenseite 22 gegenüberliegt, wird als Düsenseite 24 bezeichnet. Auf der Düsenseite 24 befindet sich das Zuführungselement 28, welches aus einem Düsenstock 30 und einer Düse 32 ausgebildet ist.

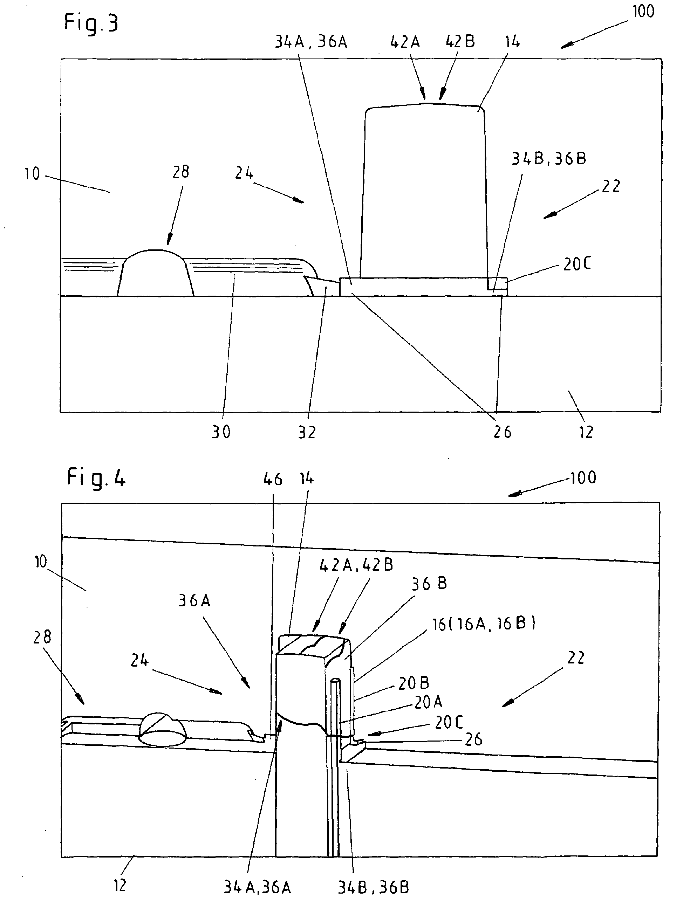

Figur 3 zeigt einen Schnitt durch die Spritzgießvorrichtung 100. Im Bereich des Werkzeugoberteils 10 ist das Zuführungselement 28 dem Angusskanal 30 und dem Anschnitt 32 sichtbar. An einer nicht dargestellten Düse bildet sich im Bereich der Ausnehmung 26 ein Anspritzpunkt 46 für die Kunststoffschmelze in der Kavität 14 aus. Figur 3 zeigt ferner auf der der Düsenseite 24 gegenüberliegenden Fließbremsenseite 22 die dritte Fließbremse 20C, die in der Ausnehmung 26 angeordnet ist. Diese dritte Fließbremse 20C stellt einen schikanenartigen Einbau in der Ausnehmung 26 dar. Die dritte Fließbremse 20C ist als mehrfacher, hintereinander liegender, schikaneartiger Einbau in der Kavität 14 ausführbar.
Bei den in den Figuren 1 bis 3 beschriebenen ersten, zweiten und dritten Fließbremsen 20A, 20B und 20C handelt es sich also um lokal eng begrenzte Reduzierungen eines Strömungsquerschnitts 52 in der Spritzgießvorrichtung 100, die sich im zu fertigenden Kunststoffbauteil 18 als Wanddickenreduzierungen wiederfinden.

Durch mindestens eine erste Fließbremse 20A, zweite Fließbremse 20B oder dritte Fließbremse 20C wird der Strömungsquerschnitt für die Kunststoffschmelze reduziert und ein Strömungswiderstand 56 für die Kunststoffschmelze erhöht.

Wird die Kavität 14 nach Einführung des starren Kerns 16A oder des beweglichen Kerns 16B durch das Werkzeugunterteil 12 in das Werkzeugoberteil 10 ausgebildet, ist der Strömungsquerschnitt 52 sowohl im Bereich der ersten Fließbremse 20A und der zweiten Fließbremse 20B als auch durch die dritte Fließbremse 20C deutlich reduziert, so dass der Strömungswiderstand 56 deutlich erhöht ist.

Unter Ausbildung der Kavität 14 mittels des starren Kerns 16A oder des beweglichen Kerns 16B ist ein Kunststoffbauteil 18 mit einem Hohlraum ausbildbar, der der Form des Kerns 16A, 16B entspricht.

Wird auf die Einführung eines starren Kerns 16A oder eines beweglichen Kerns 16B generell verzichtet und die Durchführung 60 im Werkzeugunterteil 12 nicht ausgeführt, das heißt das Unterteil 12 ist geschlossen, so befindet sich in der Kavität 14, wie Figur 3 zeigt, nur die dritte Fließbremse 20C, die vorzugsweise mehrfach hintereinander ausführbar ist. Die dritte Fließbremse 20C stellt für diesen Fall die einzige, lokal begrenzende Reduzierung des Strömungsquerschnitts 52 in der Kavität 14 der Spritzgießvorrichtung 100 dar.

Der Strömungsquerschnitt 52 wird damit nur unwesentlich verringert und der Strömungswiderstand 56, der der Kunststoffschmelze entgegengesetzt wird, nur unwesentlich erhöht.

Wird anschließend ohne Einführung eines starren Kerns 16A oder eines beweglichen Kerns 16B die Kunststoffschmelze über das Zuführungselement 28 und den Anspritzpunkt 46 der Kavität 14 zugeführt, bildet sich in der Kavität 14 eine Kunststoffschmelzefront 34 aus. Durch die dritte Fließbremse 20C wird auf der Fließbremsenseite 22 durch die Reduzierung des Strömungsquerschnitts 52 der Kunststoffschmelze ein erhöhter Strömungswiderstand 56 entgegengesetzt, so dass sich in der Kavität 14 eine erste Kunststoffschmelzefront 34A und eine zweite Kunststoffschmelzefront 34B mit unterschiedlichen Geschwindigkeiten 36 ausbildet. Dabei erreicht die erste Kunststoffschmelzefront 34A eine erste Geschwindigkeit 36A und die zweite Kunststoffschmelzefront 34B eine zweite Geschwindigkeit 36B. Durch die geringe Beeinflussung des Strömungsquerschnittes 52 durch die dritte Fließbremse 20C und somit nur geringer Beeinflussung des Strömungswiderstandes 56 wird die Differenz zwischen der ersten Geschwindigkeit 36A und der zweiten Geschwindigkeit 36B der jeweiligen Kunststoffschmelzefronten 34A und 34B nur gering ausgebildet. Unter diesen Voraussetzungen wird sich nach Füllung der gesamten Kavität 14 eine verlagerte Bindenaht 42B ausbilden, die von einer ersten Bindenaht 42A aber nur gering abweicht.

Zu einer Ausbildung der ersten Bindenaht 42A an der dargestellten Stelle kommt es unter der Voraussetzung, dass keine Fließbremsen 20A, 20B, 20C in der Kavität angeordnet sind und somit keine Veränderungen des Strömungsquerschnittes 52 vorhanden sind.

Eine Darstellung der ersten Bindenaht 42A und der verlagerten Bindenaht 42B ist in Figur 3 nur punktuell angedeutet. Wird dagegen ein starrer Kern 16A oder ein beweglicher Kern 16B in die Kavität 14 eingeführt, so befindet sich die erste, zweite, dritte Fließbremse 20A, 20B, 20C in der Kavität 14.

Figur 4 zeigt in der Spritzgießvorrichtung 100 den in der Kavität vorhandenen Kern 16 im Werkzeugoberteil 10 und dem Werkzeugunterteil 12. Die Fließbremsen 20A, 20B, 20C befinden sich im Ausführungsbeispiel auf der Fließbremsenseite 22 gegenüber der Düsenseite 24, an der sich das Zuführungselement 28 und der Anspritzpunkt 46 befinden. Die dritte Fließbremse 20C ist wiederum in der Ausnehmung 26 des Werkzeugoberteiles 10 ausgebildet. Durch diese Ausbildung ist der Strömungsquerschnitt 52 durch die Anordnung der Fließbremsen 20A, 20B, 20C auf der Fließbremsenseite 22 deutlich reduziert, so dass der Strömungswiderstand 56 auf der Fließbremsenseite 22 gegenüber der Düsenseite deutlich größer ist. Wird die Kunststoffschmelze über das Zuführungselement 28 und den Anspritzpunkt 46 der Kavität 14 zugeführt, bildet sich in der Kavität 14 die Kunststoffschmelzefront 34 aus. Durch die Fließbremsen 20A, 20B, 20C wird auf der Fließbremsenseite 22 durch Reduzierung des Strömungsquerschnittes der Kunststoffschmelze ein großer Strömungswiderstand 56 entgegengesetzt, so dass sich in der Kavität 14 eine erste Kunststoffschmelzefront 34A und eine zweite Kunststoffschmelzefront 34B mit unterschiedlichen Geschwindigkeiten 36 ausbildet. Dabei erreicht die erste Kunststoffschmelzefront 34A eine erste Geschwindigkeit 36A und die zweite Kunststoffschmelzefront 34B eine zweite Geschwindigkeit 36B. Im Gegensatz zu Figur 3 ist der Strömungsquerschnitt 52 auf der Fließbremsenseite 22 im Vergleich zur Düsenseite 24 relativ betrachtet stärker verringert, so dass die Differenz zwischen der ersten Geschwindigkeit 36A und der zweiten Geschwindigkeit 36B der jeweiligen Kunststoffschmelzefronten 34A und 34B im Vergleich zu Figur 3 größer ist.

Unter diesen Kriterien wird sich nach Füllung der gesamten Kavität 14 die verlagerte Bindenaht 42B ausbilden, die von der ersten Bindenaht 42A wesentlich stärker abweicht.

Eine zusätzliche Beeinflussung der Kunststoffschmelzefronten 34A bzw. 34B und deren Geschwindigkeiten 36A und 36B ist dadurch möglich, dass der Kern 16 nicht während der Ausbildung des Kunststoffbauteiles 18 starr in der Kavität 14 verbleibt, sondern während der Ausbildung des Kunststoffbauteiles 18 aus der Kavität 14 heraus bewegt wird. Dazu dienen die bereits oben erwähnten Betätigungseinrichtungen 40A, 40B und 40C.

Durch den Einsatz eines beweglichen Kerns 16B ist die Stelle, an der sich die verlagerte Bindenaht 42B ausbildet, gezielt beeinflussbar.

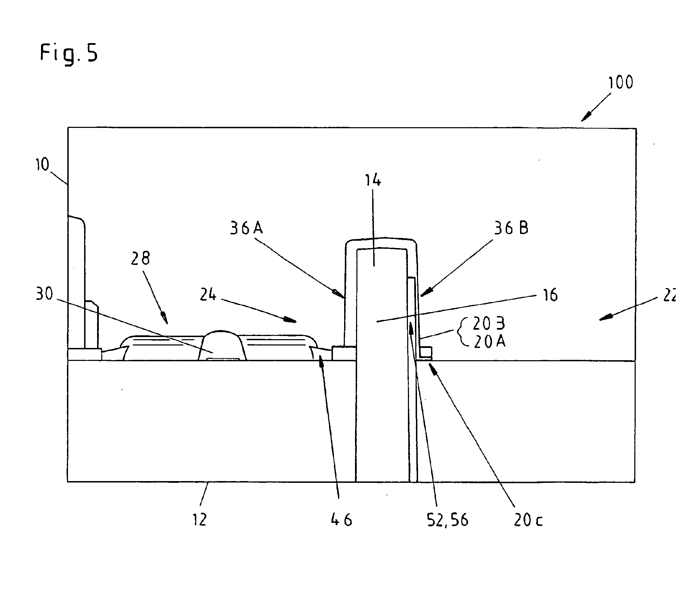

Figur 5 zeigt nochmals zur Verdeutlichung die Spritzgießvorrichtung 100 in einem Schnitt, wobei gleiche Bezugszeichen gleiche Bauteile darstellen.

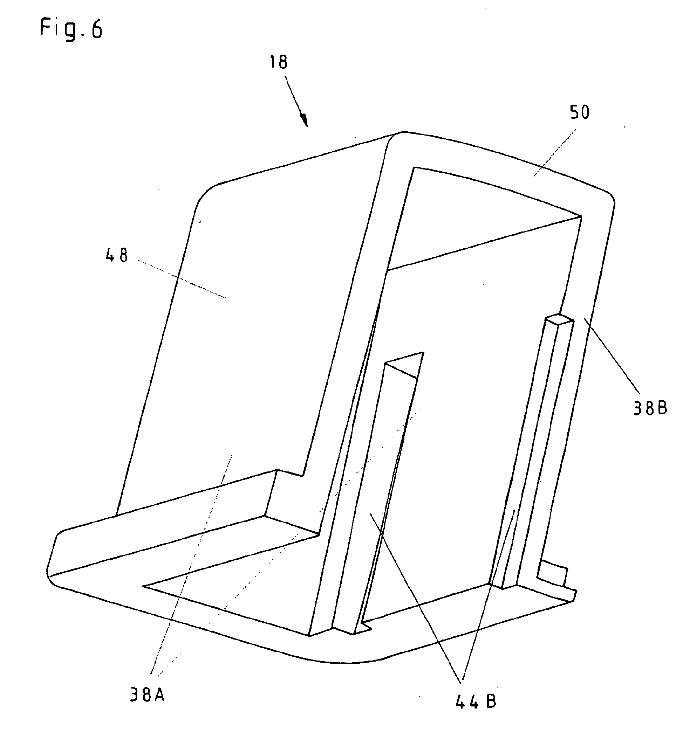

Figur 6 zeigt das Kunststoffbauteil 18. Das Kunststoffbauteil 18 weist eine Außenkontur 48 und eine Innenkontur 50 auf. Die Fließbremsen 20A, 20B bilden ein zweites Negativabbild 44A in der Innenkontur 50 des Kunststoffbauteiles 18 aus.

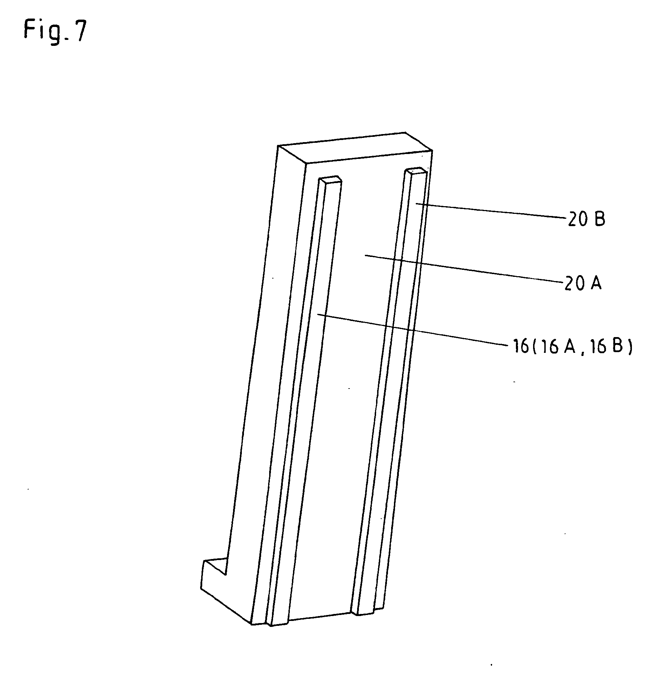

Figur 7 zeigt den Kern 16 in einer Einzeldarstellung mit der ersten Fließbremse 20A und der zweiten Fließbremse 20B, die das zweite Negativabbild 44B - wie in Figur 6 dargestellt - ausbilden. Durch den in Figur 6 dargestellten Schnitt durch das Kunststoffbauteil 18 wird im Bereich des zweiten Negativabbildes 44B eine zweite reduzierte Wandstärke 38B sichtbar. In den anderen Bereichen bildet sich eine erste Wandstärke 38A heraus.

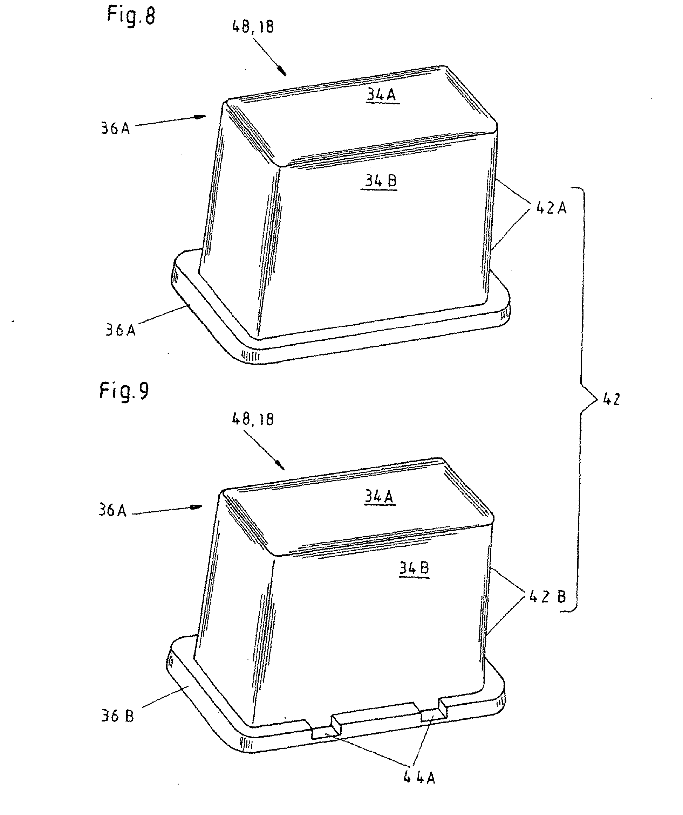

Figur 8 zeigt eine Außenansicht des Kunststoffbauteiles 18, welches ohne Einsatz von Fließbremsen hergestellt worden ist. Das Kunststoffbauteil besitzt die Außenkontur 48, die durch die Innenkontur des Werkzeugoberteiles 10 vorgegeben ist. Auf beiden Seiten des Kunststoffbauteiles 38 bildet sich beim Füllvorgang der Kavität 14 nahezu die gleiche erste Geschwindigkeit 36A aus, so dass sich die erste und zweite Kunststoffschmelzefront 34A und 34B auf der dem Werkzeugunterteil 12 entgegengesetzten Seite zu der ersten Bindenaht 42A zentral ausbilden.

Figur 9 zeigt das Kunststoffbauteil 18 in einer Außenansicht, welches mittels Fließbremsen 20A, 20B, 20C hergestellt worden ist. Es ist wiederum die Außenkontur 48 sichtbar, die in einem durch die Ausnehmung 26 im Werkzeugoberteil 10 herausgebildeten Absatz ein erstes Negativbild 44A der dritten Fließbremse 20C hinterlässt. Die im Inneren durch die Fließbremsen 20A und 20B vorhandenen zweiten Negativbilder 44B sind in Figur 9 nicht sichtbar. Durch den Einsatz der Fließbremsen 20A, 20B, 20C bildet sich in der Kavität 14 die erste Geschwindigkeit 36A und die zweite Geschwindigkeit 36B heraus, die zur Bildung der verlagerten Bindenaht 42B führt. Diese verlagerte Bindenaht 42B befindet sich, wie Figur 9 zeigt, bereits außerhalb der dem Werkzeugunterteil 12 entgegengesetzten Fläche.

Der Einsatz der Fließbremsen wie im Ausführungsbeispiel bisher beschrieben führt im Ausführungsbeispiel zur Verringerung des Strömungsquerschnittes für die in die Kavität eingeführte Kunststoffschmelze.

Die Kunststoffschmelze fließt im engen Querschnitt langsamer, da hier ein höherer Druck erforderlich ist, und die Schmelzeviskosität durch die Wärmeabfuhr steigt. Erreichbar ist somit ein langsameres Fließen der Kunststoffschmelze und eine zeitliche Verzögerung der Kunststoffschmelzefront. Dadurch erhält ein anderer Bereich der Kunststoffschmelzefront einen zeitlichen Vorteil und kann in gleicher Zeit ein größeres Volumen der Kavität füllen.

Das Verfahren ist ferner besonders vorteilhaft, da die erste und zweite Geschwindigkeit 36A und 36B durch ein rechnergestütztes System vorbestimmt werden. Im Vorfeld der Herstellung der Kunststoffbauteile 18 werden Füllsimulationen nach der Finite-Elemente-Methode durchgeführt. Dem rechnergestützten System ist eine Simulationssoftware zugeordnet, mit deren Hilfe der Kunststoffschmelzefluss, also die erste Kunststoffschmelzefront 34A und die zweite Kunststoffschmelzefront 34B, vorherberechnet werden. So werden schon in einem frühen Stadium, das Kunststoffbauteil 18 und die zugehörige Spritzgießvorrichtung 100 ausgelegt und Ergebnisse in die jeweilige Konstruktion übernommen. So sind die Kunststoffbauteile 18 aufgrund ihres einfachen Aufbaus kostengünstig herstellbar und reduzieren die Änderungskosten erheblich, wobei sich zusätzlich die Bauteilqualität deutlich steigert.

## Patentansprüche

1. Spritzgießvorrichtung (100) zur Herstellung von aus Kunststoff bestehenden Gegenständen (18), die mindestens ein Werkzeugoberteil (10) und mindestens ein Werkzeugunterteil (12) aufweist und zwischen Werkzeugoberteil (10) und Werkzeugunterteil (12) eine Kavität (14) ausbildet, mit einem Element (20), mittels dem ein Strömungswiderstand (56) einer sich in der Kavität (14) ausbreitenden Kunststoffschmelze beeinflussbar ist, wobei das Element ein beweglicher Kern (16) ist, das **dadurch gekennzeichnet, dass** das Element (20) mindestens eine erste und/oder eine zweite Fließbremse (20a, 20b), die an dem beweglichen Kern (16b) angeordnet ist, aufweist, wobei es sich bei der ersten und/oder zweiten Fließbremse (20a, 20b) um lokal eng begrenzte Reduzierungen des Strömungsquerschnittes (52) in der Spritzgießvorrichtung (100) handelt, die sich im zu fertigenden Gegenstand (18) als Wanddickenreduzierungen wiederfinden.

2. Spritzgießvorrichtung (100) nach Anspruch 1,
**dadurch gekennzeichnet, dass**
durch das Element (20) ein Strömungsquerschnitt (52) in der Kavität (14) veränderbar ist.

3. Spritzgießvorrichtung (100) nach Anspruch 1,
**dadurch gekennzeichnet, dass**
die Kavität (14) durch den in das Werkzeugoberteil (10) und durch eine Durchführung (60) des Werkzeugunterteiles (12) eingeführten Kern (16) zwischen dem Werkzeugoberteil (10) und dem Werkzeugunterteil (12) und dem Kern (16) ausbildbar ist.

4. Spritzgießvorrichtung (100) nach Anspruch 1,
**dadurch gekennzeichnet, dass**
der Kern (16) während der Ausbreitung der Kunststoffschmelze als beweglicher Kern (16B) ausführbar ist.

5. Spritzgießvorrichtung (100) nach Anspruch 1,
**dadurch gekennzeichnet, dass**
das Element (20) mindestens eine dritte Fließbremse (20C), die am Werkzeugoberteil (10) oder an einem im Werkzeugoberteil (10) ausgebildeten Einsatz angeordnet ist, aufweist.

6. Spritzgießvorrichtung (100) nach einem der vorhergehenden Ansprüche,
**dadurch gekennzeichnet, dass**
die mindestens eine erste und/oder zweite Fließbremse (20A, 20B) eine leistenartige Erhöhung auf dem beweglichen Kern (16B) ist.

7. Spritzgießvorrichtung (100) nach einem der vorhergehenden Ansprüche,
**dadurch gekennzeichnet, dass**
der bewegliche Kern (16B) mittels ihrer ersten und zweiten Fließbremse (20A und 20B) in Nuten (58) des Werkzeugunterteils (12) geführt sind.

8. Spritzgießvorrichtung (100) nach Anspruch 5,
**dadurch gekennzeichnet, dass**
die mindestens eine dritte Fließbremse (20C) ein schikanenartiger Einbau in einer Ausnehmung (26) am Werkzeugoberteil (10) oder dem im Werkzeugoberteil (10)ausgebildeten Einsatz ausbildbar ist.

9. Spritzgießvorrichtung (100) nach einem der vorhergehenden Ansprüche,
**dadurch gekennzeichnet, dass**
die Spritzgießvorrichtung (100) mindestens ein Zuführungselement (28) zur Zuführung der Kunststoffschmelze in die Kavität (14) aufweist.

10. Spritzgießvorrichtung (100) nach einem der vorhergehenden Ansprüche,
**dadurch gekennzeichnet, dass**
das mindestens eine Zuführungselement (28) einen Düsenstock und eine Düse aufweist.

11. Spritzgießvorrichtung (100) nach einem der vorhergehenden Ansprüche,
**dadurch gekennzeichnet, dass**
die Düse mindestens einen Anspritzpunkt (46) in der Kavität (14) ausbildet.

12. Spritzgießvorrichtung (100) nach Anspruch 1,
**dadurch gekennzeichnet, dass**
der bewegliche Kern (16B) eine Betätigungsvorrichtung (40) aufweist.

13. Spritzgießvorrichtung (100) nach Anspruch 12,
**dadurch gekennzeichnet, dass**
die Betätigungsvorrichtung (40) an ein rechnergestütztes System ankoppelbar ist.

14. Spritzgießvorrichtung (100) nach Anspruch 12,
**dadurch gekennzeichnet, dass**
die Betätigungsvorrichtung (40) eine mechanische Betätigungseinrichtung (40A) ist.

15. Spritzgießvorrichtung (100) nach Anspruch 12,
**dadurch gekennzeichnet, dass**
die Betätigungsvorrichtung (40) eine hydraulische Betätigungseinrichtung (40B) ist.

16. Spritzgießvorrichtung (100) nach Anspruch 12,
**dadurch gekennzeichnet, dass**
die Betätigungsvorrichtung (40) eine elektrische Betätigungseinrichtung (40C) ist.

17. Verfahren zur Herstellung von aus Kunststoff bestehenden Gegenständen (18), bei dem durch Zuführung einer plastifizierten Schmelze in eine Kavität (14), die zwischen einem Werkzeugoberteil (10) und einem Werkzeugunterteil (12) ausgebildet ist, und nach der Ausbreitung einer sich in der Kavität (14) bildenden Kunststoffschmelzefront (34), die Form des Gegenstandes (100) dimensionsstabil ausbildet und nach Verfestigung der Kunststoffschmelze der Gegenstand (18) entnommen wird, **dadurch gekennzeichnet, dass** vor Zuführung der plastifizierten Kunststoffschmelze mindestens ein eine erste und/oder eine zweite Fließbremse (20a, 20b) aufweisendes, an einem beweglichen Kern (16b) angeordnetes Element (20) in die Kavität (14) eingebracht wird, so dass ein Strömungswiderstand (56) beeinflusst wird, wobei die erste und/oder die zweite Fließbremse lokal eng begrenzte Reduzierungen des Strömungsquerschnittes (52) sind, die sich im zu fertigenden Gegenstand (18) als Wanddickenreduzierungen wiederfinden.

18. Verfahren nach Anspruch 17,
**dadurch gekennzeichnet, dass**
durch das Element (20) ein Strömungsquerschnitt (52) in der Kavität (14) verändert wird.

19. Verfahren nach Anspruch 17,
**dadurch gekennzeichnet, dass**
mindestens eine erste und zweite Kunststoffschmelzefront (34A, 34B) ausgebildet wird.

20. Verfahren nach Anspruch 17,
**dadurch gekennzeichnet, dass**
an der ersten Kunststoffschmelzefront (34A) mindestens eine erste Geschwindigkeit (36A) und der zweiten Kunststoffschmelzefront (34B) mindestens eine zweite Geschwindigkeit (36B) ausgebildet wird.

21. Verfahren nach einem der vorhergehenden Ansprüche,
**dadurch gekennzeichnet, dass**
die erste und zweite Geschwindigkeit (36A, 36B) durch ein rechnergestütztes System vorbestimmt werden.

22. Verfahren nach Anspruch 21,
**dadurch gekennzeichnet, dass**
dem rechnergestützten System eine Simulationssoftware zugeordnet ist.

23. Verfahren nach Anspruch 21,
**dadurch gekennzeichnet, dass**
die mindestens erste und zweite Geschwindigkeit (36A, 36B) bei Einsatz eines beweglich angeordneten Elementes (20) vor und/oder während der Zuführung der Kunststoffschmelze mittels des rechnergestützten Systems berechnet wird.

24. Verfahren nach Anspruch 21,
**dadurch gekennzeichnet, dass**
der mindestens eine Anspritzpunkt (46) der Kunststoffschmelze in die Kavität (14) durch das rechnergestützte System vorbestimmt wird.

25. Verfahren nach Anspruch 21,
**dadurch gekennzeichnet, dass**
eine, durch das rechnergestützte System verlagerte Bindenaht (42B) vorbestimmt zwischen der ersten und zweiten Kunststoffschmelzefront (34A und 34B) und in Abhängigkeit einer Differenz der ersten Geschwindigkeit (36A) und zweiten Geschwindigkeit (36B) ausgebildet wird.

26. Verfahren nach einem der vorhergehenden Ansprüche,
**dadurch gekennzeichnet, dass**
durch das mindestens eine Element (20) im Kunststoffbauteil (18) mindestens eine zweite Wandstärke (38B) ausgebildet wird.

## Claims

1. Injection moulding apparatus (100) for producing plastic parts (18), which has at least one upper mould part (10) and at least one lower mould part (12) and forms a cavity (14) between the upper mould part (10) and the lower mould part (12), with an element (20) by means of which a flow resistance (56) of a polymer melt spreading out in the cavity (14) can be influenced, the element being a movable core (16), **characterized in that** the element (20) has at least one first and/or one second flow decelerating means (20a, 20b), which is arranged on the movable core (16b), the first and/or second flow decelerating means (20a, 20b) being locally narrowly confined reductions of the flow cross section (52) in the injection moulding apparatus (100) that also occur in the form of wall thickness reductions in the part (18) to be produced.

2. Injection moulding apparatus (100) according to Claim 1, **characterized in that** a flow cross section (52) in the cavity (14) can be changed by the element (20).

3. Injection moulding apparatus (100) according to Claim 1, **characterized in that** the cavity (14) can be formed by the core (16) inserted into the upper mould part (10) and through a passage (60) in the lower mould part (12), between the upper mould part (10) and the lower mould part (12) and the core (16).

4. Injection moulding apparatus (100) according to Claim 1, **characterized in that** the core (16) can be configured as a core (16B) that is movable during the spreading out of the polymer melt.

5. Injection moulding apparatus (100) according to Claim 1, **characterized in that** the element (20) has at least one third flow decelerating means (20C), which is arranged on the upper mould part (10) or on an insert formed in the upper mould part (10).

6. Injection moulding apparatus (100) according to one of the preceding claims, **characterized in that** the at least one first and/or second flow decelerating means (20A, 20B) is a strip-like elevation on the movable core (16B).

7. Injection moulding apparatus (100) according to one of the preceding claims, **characterized in that** the movable core (16B) is guided by means of its first and second flow decelerating means (20A and 20B) in grooves (58) of the lower mould part (12).

8. Injection moulding apparatus (100) according to Claim 5, **characterized in that** the at least one third flow decelerating means (20C) is a chicane-like fitting in a recess (26) on the upper mould part (10) or the insert formed in the upper mould part (10).

9. Injection moulding apparatus (100) according to one of the preceding claims, **characterized in that** the injection moulding apparatus (100) has at least one feeding element (28) for feeding the polymer melt into the cavity (14).

10. Injection moulding apparatus (100) according to one of the preceding claims, **characterized in that** the at least one feeding element (28) has a nozzle holder and a nozzle.

11. Injection moulding apparatus (100) according to one of the preceding claims, **characterized in that** the nozzle forms at least one injection point (46) in the cavity (14).

12. Injection moulding apparatus (100) according to Claim 1, **characterized in that** the movable core (16B) has an actuating apparatus (40).

13. Injection moulding apparatus (100) according to Claim 12, **characterized in that** the actuating apparatus (40) can be coupled to a computer-aided system.

14. Injection moulding apparatus (100) according to Claim 12, **characterized in that** the actuating apparatus (40) is a mechanical actuating device (40A).

15. Injection moulding apparatus (100) according to Claim 12, **characterized in that** the actuating apparatus (40) is a hydraulic actuating device (40B).

16. Injection moulding apparatus (100) according to Claim 12, **characterized in that** the actuating apparatus (40) is an electrical actuating device (40C).

17. Method for producing plastic parts (18), in which the form of the part (18) is formed in a dimensionally stable manner by the feeding of a plasticized melt into a cavity (14), which is formed between an upper mould part (10) and a lower mould part (12), and after the spreading out of a polymer melt front (34) that forms in the cavity (14), and the part (18) is removed after the setting of the polymer melt, **characterized in that**, before the feeding of the plasticized polymer melt, at least one element (20) that has a first and/or a second flow decelerating means (20a, 20b) and is arranged on a movable core (16b) is introduced into the cavity (14), so that a flow resistance (56) is influenced, the first and/or the second flow decelerating means being locally narrowly confined reductions of the flow cross section (52) that also occur in the form of wall thickness reductions in the part (18) to be produced.

18. Method according to Claim 17, **characterized in that** a flow cross section (52) in the cavity (14) is changed by the element (20).

19. Method according to Claim 17, **characterized in that** at least one first and second polymer melt front (34A, 34B) is formed.

20. Method according to Claim 17, **characterized in that** at least one first rate (36A) is formed at the first polymer melt front (34A) and at least one second rate (36B) is formed at the second polymer melt front (34B) .

21. Method according to one of the preceding claims, **characterized in that** the first and second rates (36A, 36B) are predetermined by a computer-aided system.

22. Method according to Claim 21, **characterized in that** the computer-aided system is assigned simulation software.

23. Method according to Claim 21, **characterized in that**, when a movably arranged element (20) is used, the at least first and second rates (36A, 36B) are calculated by means of the computer-aided system before and/or during the feeding of the polymer melt.

24. Method according to Claim 21, **characterized in that** the least one injection point (46) of the polymer melt into the cavity (14) is predetermined by the computer-aided system.

25. Method according to Claim 21, **characterized in that** a displaced weld line (42B), predetermined by the computer-aided system, is formed between the first and second polymer melt fronts (34A and 34B) and in dependence on the difference between the first rate (36A) and the second rate (36B).

26. Method according to one of the preceding claims, **characterized in that** at least one second wall thickness (38B) is formed in the plastic component (18) by the at least one element (20).

## Revendications

1. Dispositif de moulage par injection (100) pour fabriquer des produits (18) en matière plastique, comportant au moins une partie supérieure d'outil (10) et au moins une partie inférieure d'outil (11) formant entre elles une cavité (14), comprenant un élément (20) permettant d'influencer la résistance fluidique (56) d'une matière plastique fondue se déployant dans la cavité (14),
l'élément étant un noyau mobile (16),
**caractérisé en ce que**
l'élément (20) comporte au moins un premier et/ou un second frein d'écoulement (20a, 20b) portés par le noyau mobile (16b),
les premier et/ou second freins d'écoulement (20a, 20b) assurant une réduction localement limitée de la section de passage (52) du dispositif d'injection (100), et qui se retrouve sur le produit (18), fini, comme réduction d'épaisseur de paroi.

2. Dispositif de moulage par injection (100) selon la revendication 1,
**caractérisé en ce que**
l'élément (20) est une section d'écoulement (52) variable dans la cavité (14).

3. Dispositif de moulage par injection (100) selon la revendication 1,
**caractérisé en ce que**
la cavité (14) est réalisée par le noyau (14) introduit dans la partie supérieure (10) de l'outil et par un passage (60) de la partie inférieure de l'outil (12), entre la partie supérieure de l'outil (10) et sa partie inférieure (12) ainsi que le noyau (16).

4. Dispositif de moulage par injection (100) selon la revendication 1,
**caractérisé en ce que**
le noyau (16) est réalisé comme noyau mobile (16B) au cours du déploiement de la matière plastique fondue.

5. Dispositif de moulage par injection (100) selon la revendication 1,
**caractérisé en ce que**
l'élément (20) comporte au moins un troisième frein d'écoulement (20C) prévu sur la partie supérieure (10) de l'outil ou sur un insert réalisé dans la partie supérieure (10) de l'outil.

6. Dispositif de moulage par injection (100) selon l'une des revendications précédentes,
**caractérisé en ce qu'**
au moins un premier et/ ou un second frein d'écoulement (20A, 20B) est un bossage en forme de longeron sur le noyau mobile (16B).

7. Dispositif de moulage par injection (100) selon l'une des revendications précédentes,
**caractérisé en ce que**
le noyau mobile (16B) est guidé par le premier et le second frein d'écoulement (20A, 20B) dans les rainures (58) de la partie inférieure (12) de l'outil.

8. Dispositif de moulage par injection (100) selon la revendication 5,
**caractérisé par**
au moins un troisième frein d'écoulement (20C) réalisé comme insert formant une chicane dans une cavité (26) de la partie supérieure (10) de l'outil ou dans l'insert réalisé dans la partie supérieure (10) de l'outil.

9. Dispositif de moulage par injection (100) selon l'une des revendications précédentes,
**caractérisé en ce qu'**
il comporte au moins un élément d'alimentation (28) pour assurer l'alimentation en matière plastique en fusion de la cavité (14).

10. Dispositif de moulage par injection (100) selon l'une des revendications précédentes,
**caractérisé en ce qu'**
au moins un élément d'alimentation (28) comporte une broche de buse et une buse.

11. Dispositif de moulage par injection (100) selon l'une des revendications précédentes,
**caractérisé en ce que**
la buse forme au moins un point d'injection (46) dans la cavité (14).

12. Dispositif de moulage par injection (100) selon la revendication 1,
**caractérisé en ce que**
le noyau mobile (16B) comporte un dispositif d'actionnement (40).

13. Dispositif de moulage par injection (100) selon la revendication 12,
**caractérisé en ce que**
le dispositif d'actionnement (40) est couplé à un système assisté par un calculateur.

14. Dispositif de moulage par injection (100) selon la revendication 12,
**caractérisé en ce que**
le dispositif d'actionnement (40) est un dispositif d'actionnement mécanique (40A).

15. Dispositif de moulage par injection (100) selon la revendication 12,
**caractérisé en ce que**
le dispositif d'actionnement (40) est une installation d'actionnement hydraulique (40B).

16. Dispositif de moulage par injection (100) selon la revendication 12,
**caractérisé en ce que**
le dispositif d'actionnement (40) est une installation d'actionnement électrique (40C).

17. Procédé de fabrication de produits (18) en matière plastique selon lequel par l'alimentation d'une matière plastifiée dans une cavité (14) formée entre une partie supérieure (10) et une partie inférieure (12) d'outil et après déploiement du front de matière plastique fondue (34) dans la cavité (14), la forme du produit (100) est stable en dimension et après solidification de la matière plastique fondue, on extrait le produit (18),
**caractérisé en ce qu'**
avant d'assurer l'alimentation de la matière plastique fondue, à l'état plastifié, on introduit dans la cavité (14) un élément (20) ayant un premier et/ ou un second freins d'écoulement (20a, 20b) sur un noyau mobile (16b), de façon à influencer la résistance à l'écoulement (56), le premier et/ou le second freins de fluage correspondant à des réductions locales étroitement limitées de la section découlement (52), et qui se retrouvent sur le produit fini (18) comme réduction d'épaisseur de paroi.

18. Procédé selon la revendication 17,
**caractérisé en ce que**
l'élément (20) est une section d'écoulement (52) variable dans la cavité (14).

19. Procédé selon la revendication 17,
**caractérisé en ce qu'**
on développe un premier et un second front de matière plastique fondue (34A, 34B).

20. Procédé selon la revendication 17,
**caractérisé en ce que**
le premier front de matière plastique fondue (34A) se déploie suivant au moins une première vitesse (36A) et le second front de matière plastique fondue (34B) se développe au moins selon une seconde vitesse (36B).

21. Procédé selon l'une des revendications précédentes,
**caractérisé en ce que**
la première et la seconde vitesse (36A, 36B) sont prédéfinies par un système assisté par calculateur.

22. Procédé selon la revendication 21,
**caractérisé en ce que**
le système assisté par un calculateur comporte un programme de simulation.

23. Procédé selon la revendication 21,
**caractérisé en ce qu'**
on calcule au moins la première et la seconde vitesse (36A, 36B) pour utiliser en un élément mobile (20) avant et/ou pendant l'arrivée de la matière plastique fondue à l'aide d'un système assisté par calculateur.

24. Procédé selon la revendication 21,
**caractérisé en ce qu'**
au moins un point d'injection (46) de la matière plastique fondue dans la cavité (14) est prédéfini par le système assisté par calculateur.

25. Procédé selon la revendication 21,
**caractérisé par**
un cordon de liaison (42B) déplacé par le système assisté par calculateur, en étant prédéfini entre le premier front de matière plastique fondue et le seconde front 34A, 34B) et qui se développe en fonction de la différence entre la première vitesse (36A) et la seconde vitesse (36B).

26. Procédé selon l'une des revendications précédentes,
**caractérisé en ce qu'**
au moins un élément (20) du composant en matière plastique (18) a au moins une seconde épaisseur de paroi (38B).
